# EUROPEAN PATENT APPLICATION

(11) **EP 3 960 496 A1**
(43) Date of publication of application: **02.03.2022**
(21) Application number: 21194156.2
(22) Date of filing: 31.08.2021
(51) Int. Cl.: B60C 9/20

(54) **TRUCK TIRE**

(30) Priority: 31.08.2020 US 202063072592 P; 14.06.2021 US 202117346381
(71) Applicant: The Goodyear Tire & Rubber Company, Akron, Ohio 44316 (US)
(72) Inventor: MANOGARAN, Arun Prasath, L-8715 Everlange (LU); LIONETTI, Robert Edward, L-7227 Bereldange (LU); COCCON, Marco Nicolo, L-2230 Luxembourg (LU); PASSANTE SPACCAPIETRA, Ettore, L-9070 Ettelbruck (LU); MULLER, Philippe Joseph Auguste, B-6971 Champlon (BE); WINKIN, Didier, B-6600 Bastogne (BE); NAWALE, Vaibhav, L-1220 Luxembourg (LU); KRIER, Roland Willibrord, L-6622 Wasserbillig (LU)
(74) Representative: Goodyear IP Law

(57) **Abstract**

A pneumatic tire (10) is disclosed. The tire (10) comprises a tread (12) and a belt reinforcement structure (50) located radially inward of the tread (12). The belt reinforcement structure (50) includes a first working belt (54) comprising cords or wire and a second working belt (56) comprising cords or wire. The angles of the cords of the wire in the first and second working belts (54, 56) range from +/- 12 degrees to +/-36 degrees with respect to the circumferential direction. The belt reinforcement structure (50) further comprises a relatively low angle belt (58) comprising cords or wire angled at an angle of less than +/- 5 degrees with respect to the circumferential direction. It further includes a protector belt (62) located radially outwards of the first and second working belt (54, 56). The protector belt (62) comprises cords or wire having an energy absorption of more than 7.5 J/mm².

## Description

### Field of the Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

### Summary of the Invention

The invention relates to a tire in accordance with claim 1.

Dependent claims refer to preferred embodiments of the invention.

The invention provides in a first preferred aspect a pneumatic tire for use on trucks, the tire comprising: a tread and a belt reinforcement structure located radially inward of the tread, the belt structure including a first and second working belt, wherein the angle of the first and second working belts range from 12 degrees to 36 degrees from the circumferential direction, wherein the first and second working belts are extensible, wherein the belt structure further comprises a low angle belt having reinforcements angled at less than 5 degrees, and wherein the low angle belt has extensible reinforcements.

### Definitions

"Aspect Ratio" means the ratio of a tire's section height to its section width.
"Axial" and "axially" mean the lines or directions that are parallel to the axis of rotation of the tire.
"Belt Structure" or "Belt Package" means at least two annular layers or plies of parallel cords, woven or unwoven, underlying the tread, unanchored to the bead, and preferably having both left and right cord angles in the range from 17º to 27º with respect to the equatorial plane of the tire.
"Circumferential" means lines or directions perpendicular to the axial direction within + or - 5 degrees.
"Cord" means one of the reinforcement strands, including fibers or wires, which are used to reinforce the plies.
"Extensible" means a cord having a relative elongation at break of greater than 0.2% at 10% of the breaking load, when measured from a cord extracted from a cured tire.
"Ply" means a cord-reinforced layer of elastomer-coated, radially deployed or otherwise parallel cords.
"Radial" and "radially" mean directions radially toward or away from the axis of rotation of the tire.
"High Tensile Steel (HT)" means a steel with a tensile strength of at least 3400 MPa at 0.20 mm filament diameter.
"Super Tensile Steel (ST)" means a steel with a tensile strength of at least 3650 MPa at 0.20 mm filament diameter.
"Ultra Tensile Steel (UT)" means a steel with a tensile strength of at least 4000 MPa at 0.20 mm filament diameter.

### Brief Description of the Drawings

The invention will be described by way of example and with reference to the accompanying drawings in which:
FIG. 1 is a cross-sectional view of a first embodiment of a tire of the present invention; and

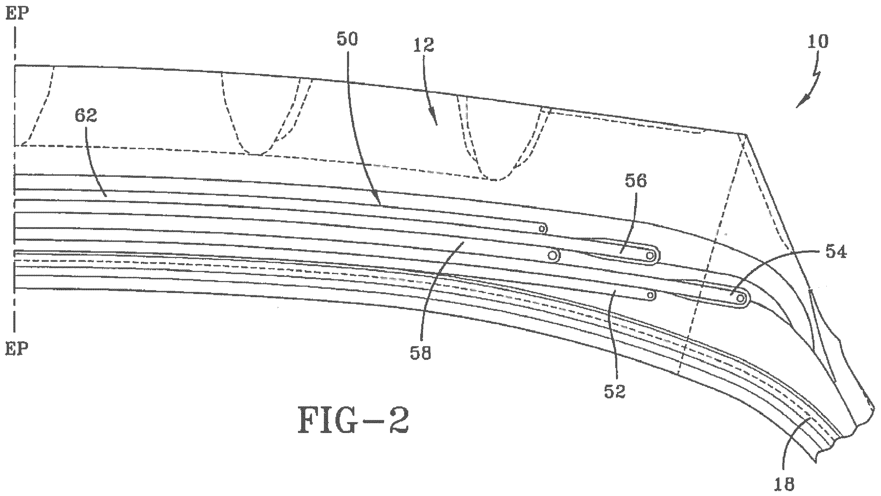

FIG. 2 is a close-up view of the belt package of the tire of FIG. 1.

### Detailed Description of Example Embodiments of the Invention

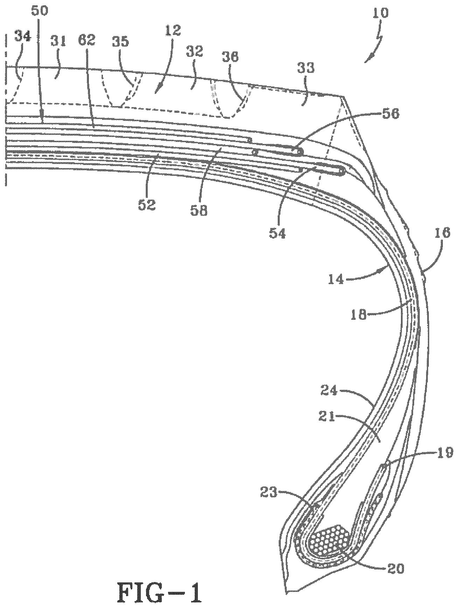

FIG. 1 illustrates a first embodiment of one half of a pneumatic tire 10, suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing 14 which includes two opposed sidewalls 16 which extend down from the tread 12 to the bead area. The casing of the tire may optionally include an inner liner 24 which is typically formed of halobutyl rubber which forms an air impervious barrier. The tire casing 14 further includes one or more radial plies 18 extending from the tread, down the sidewall to the tire bead 20. Preferably, the radial ply 18 is wrapped about or otherwise secured to each annular bead 20. In the embodiment illustrated and not limited to same, there is only one ply 18 and it is wrapped around the bead in an inside out manner such that the ply ending 19 is located axially outward and radially outwards of the bead. The beads 20 may be any desired shape, but in this embodiment, it is shown as a hexagonal configuration with steel filaments.

The tire may further optionally include an apex 21 which may be shaped like a triangle. The ply turnup in the bead area may be optionally reinforced with a chipper 23 wrapped about the bead ply 18.

The tire 10 further includes a belt package 50 which is located between the tread and the one or more plies 18. The belt package may comprise one or more layers of reinforcement. The ply 18 and the belt reinforcing structure 50 are made from cord reinforced elastomeric material, wherein the cords are typically steel wire or polyamide filaments and the elastomer preferably being rubber.

### Transition Belt 52

The belt reinforcing package 50 may include an optional transitional belt 52 that is the radially innermost belt of the belt package 50. The transition belt 52 has an axial belt width which preferably ranges from 60% to 90% of the tread arc width. The transition belt 52 preferably has an orientation that has an angle of from 45 to 70 degrees (preferably right). The transition belt 52 is preferably made of ultra tensile steel with a construction of 3+2x0.35 UT.

### Working Belts 54, 56

Belt reinforcing structure 50 further includes a first and second extensible working belt 54, 56. The first working belt 54 is located radially inwards of second working belt 56. Preferably, first working belt 54 has a belt width substantially equal to the tread arc width. Preferably, it is the widest belt of the belt package 50. The breaker angle of first working belt 54 is between 12 and 36 degrees, preferably with a right orientation, more preferably in the range of 14 to 18 degrees or more preferably 30 to 34 degrees. The first working belt 54 is made of extensible or high elongation wire and has a % elongation at 10% of breaking load of greater than 0.2%, as measured from a cord taken from a cured tire. Preferably, the % elongation at the 10% of breaking load is greater than 0.4 %, more preferably greater than 0.8%, and most preferably greater than 1.2%. The first working belt construction is preferably formed of wire having a wire construction of 3x7x, 3x4x, 4x4x. Preferably, the wire has a construction of 4+3x, and more preferably, a wire construction of 4+3x0.35 UT. The EPI (ends per 2.54 cm) preferably ranges from 8 to 14.

The second working belt 56 is located radially outward of the first working belt, and preferably has a width less than the width of first working belt 54. Preferably, the second working belt 56 has a width less than the width of belt 54 by a step off, which preferably ranges from 10 to 20 mm. The working belt 56 has a breaker angle in a range of from 16 to 30 degrees, preferably with a left orientation, more preferably in the range of from 19 to 25 degrees. The second working belt 56 is preferably made of extensible or high elongation wire, having the same construction with the same but opposite angular orientation as the first working belt 54.

### Low Angle Belt 58

The belt structure 50 further comprises a relatively low angle belt 58 which is preferably located between the working pair belts, 54, 56. The relatively low angle belt 58 may also be located between belts 52 and 54 or radially outward of belt 56. The relatively low angle belt 58 has reinforcements that are oriented circumferentially at 5 degrees or less, preferably at 0 degree or less than 1 degree. The belt 58 is preferably formed from spirally winding a rubberized strip of one or more cords. Preferably, the strip has 1-4 steel cords. Alternatively, the belt 58 may be formed of a cut belt with the reinforcements oriented in the range of from 0 to 10 degrees from the circumferential direction, or more preferably in the range of from 0 to 5 degrees from the circumferential direction. The relatively low angle belt 58 has a width sized to avoid compression in the shoulder area. The belt width of relatively low angle belt 58 is preferably less than the belt width of the first and second working belts. The belt structure of the relatively low angle belt 58 may be steel formed of a 3x7 construction, a 3x4 construction, or a 4x4 construction. More preferably, the belt structure of the relatively low angle belt 58 is steel formed of a 3x7x0.22 construction, a 3x4x0.26 construction, or a 4x4x0.22 construction, and preferably formed of high tensile steel. The reinforcement cords of the relatively low angle belt 58 are preferably extensible. For measurements taken from a bare cord taken from a cured tire, the % elongation at 10% of breaking load is greater than 0.2%, and preferably 0.4% or more, and more preferably 0.6% or more, and most preferably 0.8%. Alternatively, the relatively low angle belt may be formed of non-metal reinforcements such as aramid, carbon fiber, or polyketone or POK.

### Top Protection Belt

The belt structure may further include a protector belt 62 that is the radially outermost belt. The top protector belt 62 has a width that is preferably in the range of from 80 to 85% of the width of the relatively low angle belt 58. Preferably, the belt 62 should have the same angle and orientation as the adjacent belt, 56. The protector belt 62 preferably has reinforcement cords made of high impact steel cord wherein the cord has full rubber penetration that helps in avoiding corrosion and enable excellent retreadability. It also provides high impact resistance as it exhibits more work to break because of its enhanced % elongation (> 5%) even after embedded in rubber. Preferably, the reinforcement cords of the protector belt 62 have a cord construction of 5x, and more preferably, 5x0.35 or 5x0.38.

The reinforcement cords are preferably made of steel, and are preferably high impact cords (HI), with a very high energy absorption with energy/cord > 7.5 J/mm² or > 10 J/mm² using a Charpy Impact Tester and a Charpy Test (ASTM D6110-18) in a 2.54 cm strip with 10 EPI (ends per 2.54 cm).

Maximum compressive stresses of such cords are above 350 MPa at maximum deformation at kinking of > 1.5%. Having a high-impact cord top protective belt helps in absorbing the shock created during an impact and relieves the stresses on the tread shoulder grooves.

The aspect ratio of the tire 12 described above may vary. The aspect ratio is preferably in the range of from 50 to 90.

The tire 12 has a net to gross ratio in the range of from 70 to 90, more preferably in the range of from 74 to 86, more preferably from 78 to 84.

## Claims

1. A pneumatic tire, the tire (10) comprising: a tread (12) and a belt reinforcement structure (50) located radially inward of the tread (12), the belt reinforcement structure (50) including a first working belt (54) comprising cords or wire and a second working belt (56) comprising cords or wire, wherein the angles of the cords of the wire in the first and second working belts (54, 56) range from +/- 12 degrees to +/-36 degrees with respect to the circumferential direction, wherein the belt reinforcement structure (50) further comprises a relatively low angle belt (58) comprising cords or wire angled at an angle of less than +/- 5 degrees with respect to the circumferential direction, and further including a protector belt (62) located radially outwards of the first and second working belt (54, 56), wherein the protector belt (62) comprises cords or wire having an energy absorption of more than 7.5 J/mm².

2. The tire of claim 1 wherein the relatively low angle belt (58) is located radially between the first and second working belt (54, 56).

3. The tire of claim 1 or 2 wherein the first and second working belts (54, 56) comprise cords or wire having a % elongation at 10% of breaking load greater than 0.2%, alternatively greater than 0.4% or greater than 0.6%, when taken from cords or wire from a cured tire.

4. The tire of at least one of the previous claims wherein the relatively low angle belt (58) comprises cords or wire having a % elongation at 10% of breaking load greater than 0.8 %, alternatively greater than 1.2%, when taken from wire from a cured tire.

5. The tire of at least one of the previous claims wherein first working belt (54) has an axial width in a range of from 95% to 105% or of 100% to the tread arc width.

6. The tire of at least one of the previous claims wherein first working belt (54) has an axial width greater than the axial width of the relatively low angle belt (58) and/or wherein the second working belt (56) has an axial width greater than the axial width of the relatively low angle belt (58).

7. The tire of at least one of the previous claims wherein the first and second working belts (54, 56) each comprise a wire have a construction of 4+3x0.35 UT.

8. The tire of at least one of the previous claims wherein the protector belt comprises cords or wire having a 5x construction, preferably a 5x0.35 or 5x0.38 construction.

9. The tire of at least one of the previous claims wherein the first and second working belts (54, 56) comprise cords or wire having a 4+3x construction.

10. The tire of at least one of the previous claims wherein the relatively low angle belt (58) comprises cords or wire having a 3x7 construction, a 4x4 construction, a 3x6 construction or a 3x4 construction.

11. The tire of at least one of the previous claims wherein the protector belt (62) comprises cords or wire having an energy absorption of more than 10 J/mm².

12. The tire of at least one of the previous claims wherein the protector belt comprises steel cords.

13. The tire of at least one of the previous claims wherein the tire is a truck tire.
